(19) Europäisches Patentamt / European Patent Office / Office européen des brevets

(11) **EP 4 259 525 B1**

(12) **FASCICULE DE BREVET EUROPEEN**

(45) Date de publication et mention de la délivrance du brevet:
**13.11.2024 Bulletin 2024/46**

(21) Numéro de dépôt: **21840078.6**

(22) Date de dépôt: **01.12.2021**

(51) Classification Internationale des Brevets (IPC):
**B64F 1/36** *(2024.01)* **G08G 5/02** *(2006.01)*
**G08G 5/00** *(2006.01)*

(52) Classification Coopérative des Brevets (CPC):
**G08G 5/025; B64F 1/36; G08G 5/0013; G08G 5/0026; G08G 5/0091**

(86) Numéro de dépôt international:
**PCT/FR2021/052168**

(87) Numéro de publication internationale:
**WO 2022/123147 (16.06.2022 Gazette 2022/24)**

(54) **PROCEDE ET SYSTEME DE DETERMINATION DE CONDITIONS DE PISTE D'ATTERRISSAGE POUR AERONEFS**

VERFAHREN UND SYSTEM ZUR BESTIMMUNG DER BEDINGUNGEN FÜR DIE LANDEBAHN EINES FLUGZEUGS

METHOD AND SYSTEM FOR DETERMINING AIRCRAFT LANDING RUNWAY CONDITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2020 FR 2013115**

(43) Date de publication de la demande:
**18.10.2023 Bulletin 2023/42**

(73) Titulaires:
• **SAFRAN AIRCRAFT ENGINES**
  **75015 Paris (FR)**
• **Safran Electronics & Defense**
  **75015 Paris (FR)**
• **Safran Landing Systems**
  **78140 Vélizy-Villacoublay (FR)**
• **Safran Nacelles**
  **76700 Gonfreville-l'Orcher (FR)**

(72) Inventeurs:
• **MAALIOUNE, Hakim**
  **77550 MOISSY-CRAMAYEL (FR)**
• **MIRALLES, Laurent**
  **77550 MOISSY-CRAMAYEL (FR)**
• **BASTIDE, Christophe**
  **77550 MOISSY-CRAMAYEL (FR)**
• **FERT, Jérémy Edmond**
  **77550 MOISSY-CRAMAYEL (FR)**
• **HUPIN, Vincent**
  **77550 MOISSY-CRAMAYEL (FR)**

(74) Mandataire: **Casalonga**
**Casalonga & Partners**
**Bayerstraße 71/73**
**80335 München (DE)**

(56) Documents cités:
FR-A1- 3 077 913     US-A1- 2010 079 308
US-A1- 2015 142 388     US-A1- 2019 156 682
US-B1- 10 202 204

## Description

La présente invention concerne, de manière générale, l'optimisation du trafic des aéroports et la diminution du nombre de fermetures de pistes qui peuvent avoir des conséquences financières très importantes pour les exploitants des aéroports.

Plus particulièrement, l'invention concerne la détermination des conditions des pistes d'atterrissage d'un aéroport afin d'optimiser l'utilisation des pistes, tout en satisfaisant aux exigences de sécurité.

A ce jour, les exploitants des aéroports doivent surveiller les conditions de pistes. Cette surveillance s'effectue soit à partir de rapports radio fournis par les avions juste après l'atterrissage, soit à partir de mesures de coefficients de friction réalisés au moyen de camions testeurs qui circulent sur les pistes, soit à partir de capteurs enterrés sur la piste qui déterminent le type et la hauteur des contaminants, soit à partir de sondes météorologiques, soit à partir d'observations et mesures manuelles par un inspecteur de piste, soit encore à partir de la combinaison manuelle de toutes ces sources de données.

Les rapports radio fournis à l'atterrissage par le pilote peuvent présenter une part de subjectivité. En ce qui concerne les mesures des coefficients de friction, cette source de données est également imprécise puisque le camion testeur utilisé pour réaliser les mesures ne permet pas de simuler efficacement le roulage d'un avion, en particulier d'un gros porteur, de sorte que les mesures faites sont relativement imprécises. En outre, cette source de données nécessite de fermer les pistes lors de leur mesure. Les mesures des capteurs enterrés ne représentent qu'un échantillon d'1cm2 sur une piste de plusieurs kilomètres. Il en va de même des mesures manuelles des inspecteurs de pistes.

Il est par ailleurs connu d'estimer un indicateur de glissance d'une piste d'un aéroport en détectant l'écart latéral d'un avion par rapport à une trajectoire de référence, ou de surveiller la décélération d'un avion en fonction de données de freinage.

Le document US 10 202 204 B1 divulgue un procédé et un appareil complets pour les avions de transport commercial, les opérations aériennes et la sécurité aérienne, et en particulier, offrant une sécurité accrue par la mesure, la surveillance, la gestion et le contrôle de la piste d'avion, les opérations, qui comprennent les décollages et les atterrissages, ainsi que toutes les manoeuvres associées. Le document US 2019/156682 A1 divulgue un système d'amélioration des conditions d'atterrissage de l'aéronef en considérant les données fournies par des avions qui ont atterris avant. Le document US 2010/079308 A1 divulgue un procédé pour superviser une phase d'atterrissage d'aéronef en considérant également les paramètres de la piste. Le document FR 3 077 913 A1 divulgue un procédé d'aide à la décision avant un début de descente finale d'un aéronef en vue des conditions d'une piste d'atterrissages. Le document US 2015/142388 A1 divulgue un procédé pour déterminer un coefficient de friction d'une piste d'atterrissage en agrégeant des coefficients de friction pour différentes locations de la piste.

Au vu de ce qui précède, le but de l'invention est de délivrer un état des conditions de piste d'atterrissage pour aéronef qui soit d'une fiabilité et d'une pertinence accrues et qui puisse être utilisé pour l'optimisation de l'utilisation des pistes par les exploitants des aéroports. De plus, l'objectif est une mise en cohérence de toutes ces sources de mesure disponibles ainsi que l'ajout de nouveaux procédés plus fiables, pondérés selon la pertinence de chaque source de données.

L'invention a donc pour objet, selon un premier aspect, un procédé de détermination de conditions de piste d'atterrissage pour aéronefs, qui comprend les étapes de :

- acquisition d'un ensemble de groupes de données de différents types pour l'évaluation et l'observation de conditions de dégradation de la piste ;
- élaboration de coefficients de pondération de chaque groupe de données ;
- filtrage des données ;
- détermination, pour chaque groupe de données, d'un état de piste partiel ;
- modification des coefficients de pondération de chaque groupe de données ; et
- combinaison des états de piste partiels pour élaborer un coefficient de piste associé à un indice de confiance élaboré à partir de coefficients de pondération modifiés.

Avantageusement, lors du filtrage, les données sont regroupées par segments de zone de freinage associés chacun à des informations d'identification du segment de zone de freinage, des informations de datation desdites données, des informations de position du segment et un coefficient de pondération modifié.

Selon une autre caractéristique du procédé selon l'invention, lors de l'acquisition des données, on acquiert des premières données relatives à des paramètres de freinage de l'aéronef et des deuxièmes données élaborées au sol portant sur les conditions de roulage de l'aéronef.

Les premières données sont avantageusement acquises lorsque l'avion roule sur la piste d'atterrissage à une vitesse inférieure à une valeur de seuil.

Selon une autre caractéristique, à l'issue de l'étape de filtrage, les premières données relatives aux paramètres de freinage sont fournies à un étage de calcul apte à élaborer un coefficient de friction de la piste horodaté et un coefficient de pondération modifié.

Avantageusement, lors de l'étape de calcul du coefficient de friction, on calcule le coefficient de friction à partir des premières données filtrées et des deuxièmes données filtrées.

Le procédé peut en outre comporter une étape de décodage des premières données et une étape de décodage des deuxièmes données.

Par exemple, les deuxièmes données comprennent des données de position de l'aéronef, des données portant sur les conditions de piste et des données météorologiques.

Avantageusement, le coefficient de pondération issu de l'étape de filtrage est modifié en fonction du temps ou de la fréquence d'échantillonnage des données.

Le procédé peut en outre comporter une étape préalable d'initialisation de coefficients de pondération pour chaque groupe de données.

Selon encore une autre caractéristique du procédé selon l'invention, lors de l'étape de détermination de l'état de piste partiel, on utilise des données d'un autre groupe de données.

On peut prévoir que le coefficient de piste est élaboré pour différents secteurs de la piste, notamment par tiers de piste. En outre, on peut élaborer un historique des coefficients de piste.

L'invention a également pour objet un système de détermination de conditions de piste d'atterrissage pour aéronefs, ce système comprenant :

- des moyens d'acquisition d'un ensemble de groupes de données de différents types pour l'évaluation et l'observation de conditions de dégradation de la piste ;
- des moyens pour affecter des coefficients de pondération aux données des groupes de données ;
- des moyens de filtrage de données ; et
- des moyens de calcul configurés pour déterminer, pour chaque groupe de données, un état de piste partiel et pour modifier les coefficients de pondération de chaque groupe de données ;

lesdits moyens de calcul étant aptes à combiner les états de piste partiels pour élaborer un coefficient de piste associé à un indice de confiance élaboré à partir des coefficients de pondération modifiés.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] illustre l'architecture générale d'un système de détermination de conditions de piste d'atterrissage conforme à l'invention ;
[Fig 2] est un schéma synoptique d'un système de détermination de conditions de pistes d'atterrissage conforme à l'invention, montrant les principales plateformes fonctionnelles du système ;
[Fig 3] est un organigramme montrant les principales phases d'acquisition et de traitement des données pour l'élaboration du coefficient de piste ;
[Fig 4] est un organigramme illustrant l'acquisition des données relatives aux paramètres de freinage de l'aéronef ;

[Fig 5] illustre le filtrage des données ;
[Fig 6] illustre le calcul du coefficient de friction μ vu par l'avion ; et
[Fig 7] montre schématiquement un exemple de rapport à l'issue du procédé de détermination de conditions de piste conforme à l'invention.

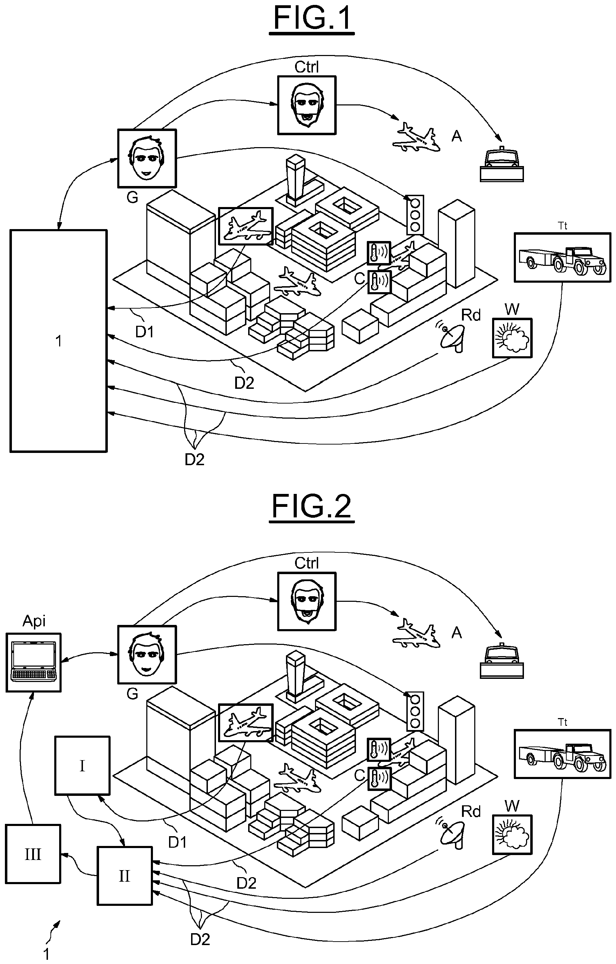

On a représenté sur la figure 1 un exemple de réalisation d'un système de détermination de conditions de piste d'atterrissage pour aéronef conforme à l'invention.

Ce système est destiné à calculer et à fournir un coefficient de pistes RWYCC (pour « Runway Condition Code », en anglais), pour divers tronçons de pistes d'atterrissage d'un aéroport et à délivrer des conditions de piste à l'exploitant de l'aéroport afin de lui permettre d'optimiser l'exploitation des pistes, notamment en diminuant les fermetures de pistes. Ce coefficient RWYCC est conforme à la règlementation GRF (Global Reporting Format) en vigueur d'après la RTM.0704.

Ce coefficient RWYCC est élaboré à partir de diverses sources de données et est fourni avec un indice de confiance traduisant la fiabilité du coefficient calculé.

Le coefficient RWYCC est en particulier élaboré à partir de premières données relatives à des paramètres de freinage de l'aéronef et à partir de deuxièmes données élaborées au sol portant sur les conditions de roulage de l'aéronef.

En se référant également à la figure 2, les premières données D1 sont délivrées par l'avion, après atterrissage, sous la forme d'un rapport radio.

Il peut par exemple s'agir de données comprenant notamment le type d'avion, la masse de l'avion, la vitesse de la roue par rapport au sol, la pression hydraulique de freinage, la phase de vol, le statut des inverseurs de poussées, de l'enfoncement de la pédale de freinage, les positions GPS...

Les deuxièmes données D2 portent plus spécifiquement sur les conditions de pistes et sont délivrées par des capteurs C, par des données radar Rd, par des rapports météo W ou des mesures délivrées par des camions testeurs Tt.

Les capteurs sont par exemple utilisés pour déterminer la présence éventuelle de contaminants, de type eau, neige, eau stagnante, boue, ..., l'épaisseur du contaminant, l'état de surface de la piste, par exemple sec, mouillé, mouillé glissant, la température au sol,...

Les données radar sont notamment destinées à déterminer la position de l'avion et le camion testeur fournit un coefficient de friction.

Le système de détermination de conditions de piste comprend essentiellement une plateforme 1 d'acquisition de données et de calcul qui acquiert les divers groupes de données D1 et D2 utiles pour l'évaluation et l'observation des conditions de dégradation des pistes de l'aéroport, et calcule, pour chaque tronçon de piste, par exemple pour chaque tiers de piste, un coefficient de piste associé à un indice de confiance. Cette plateforme 1 fournit en outre une interface homme-machine accessible par exemple au moyen d'une application informatique API par le gestionnaire de l'aéroport G lequel fournit ces informations au contrôleur aérien Ctrl pour délivrer ces informations aux avions en vol A.

La plateforme 1 comporte ainsi une interface I de collecte et de traitement des données de vol qui reçoit les données D1 délivrées par l'avion, un étage II de stockage et de décodage de données recevant les premières données D1 décodées par l'interface I et les deuxièmes données D2 et un étage III de calcul recevant les données décodées par l'étage II de stockage et de décodage et configuré pour calculer à partir des données décodées les coefficients de pistes associés chacun à un indice de confiance, dans un format adapté pour être présenté sur l'interface API.

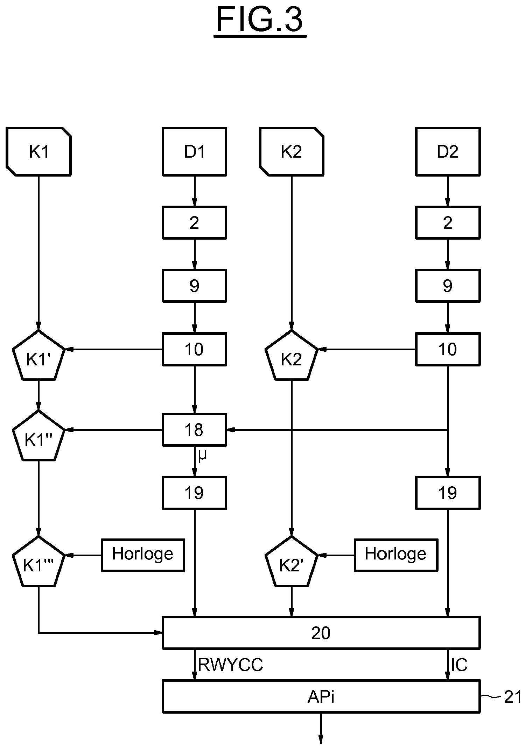

On va maintenant décrire en référence à la figure 3 les principales étapes du procédé de détermination de conditions de piste conforme à l'invention.

Comme on le voit, ce procédé comporte deux phases d'acquisition et de traitement de données réalisées en parallèle pour l'acquisition et le traitement des premiers et deuxièmes groupes de données D1 et D2.

En ce qui concerne, en premier lieu, les données de freinage de l'avion D1, lors d'une première étape 2, les données brutes sont acquises.

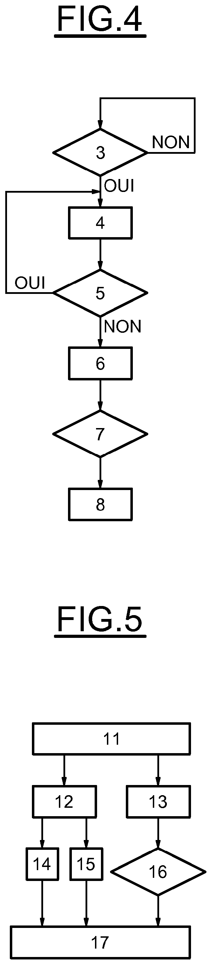

Comme visible sur la figure 4, cette première étape 2 est initiée à l'atterrissage, dès que l'avion entre en contact avec la piste (étape 3).

Si tel est le cas, les données de freinage sont enregistrées par l'interface I (étape 4). Ces données sont enregistrées tant que l'avion est sur la piste d'atterrissage et que la vitesse par rapport au sol est supérieure à une vitesse limite, par exemple de dix noeuds (étape 5). En dehors de ces conditions, l'enregistrement est arrêté (étape 6). Lors de l'étape 7 suivante, il est vérifié si les conditions de transmission des données sont satisfaites et, si tel est le cas, les données brutes enregistrées sont transmises et mémorisées par l'étage II de stockage et de décodage (étape 8).

Les conditions de transmission peuvent être déterminées selon le type d'avion, la compagnie aérienne et l'aéroport de destination.

A l'issue de cette phase de capture de données, les données brutes sont décodées (étape 9) par l'étage II de stockage et de décodage de données puis filtrées et traitées par le troisième étage III de calcul (étape 10).

On notera que l'interface I de collecte et de traitement et l'étage II de stockage affectent à chaque groupe de données un coefficient de pondération, respectivement K1, en ce qui concerne le premier groupe de données D1 et K2, en ce qui concerne le deuxième groupe de données D2. Ainsi, à titre d'exemple non limitatif, les données de radar sont associées à un coefficient de pondération 25, les données issues des capteurs sont associées à un coefficient égal à 30, les données météorologiques ont un coefficient égal à 20 et les données de freinage ont un coefficient de 25.

Pour chaque groupe de données, un état de piste partiel est calculé et l'on détermine l'évolution des conditions de piste associée à une estimation de l'évolution d'un indice de confiance à partir des états de piste calculés.

Le coefficient de pondération K1 ou K2 d'un sous-ensemble est conditionné au cours du procédé par la pondération du groupe de données, la pertinence des données analysées, leur fréquence d'échantillonnage et la datation des données acquises, en fonction du temps, l'indice de confiance se dégradant en fonction du temps, sans nouvelles données.

Les coefficients de pondération sont également modifiés si la des données d'un autre groupe sont prises en compte.

En effet, le traitement de chaque groupe de données est capable d'utiliser, en entrée, des données brutes d'un autre groupe de données décodées brutes.

Par exemple, les données de freinage peuvent être combinées aux données radar afin de corréler la position vue par l'avion et celle donnée par le radar. De même, les données de freinage peuvent être combinées aux données issues des capteurs afin d'utiliser, selon le contexte, les données de freinage pour optimiser et corréler les calculs.

Par exemple, si les données radar ne sont pas à disposition, les données de positionnement de l'avion disponible dans les calculateurs de bords sont utilisées.

On notera que, par défaut, ces données radar ne sont pas présentes, et l'on utilisera les données qui sont dans l'avion, en plus des vitesses de roues, la vitesse de l'avion, l'enfoncement des pédales,

En effet, une température négative et des chutes de neige annoncées par les capteurs impliqueront une prédominance du coefficient de piste associé à une piste contaminée.

Le calcul ultérieur du coefficient de piste résulte de la fusion des résultats issus de chaque groupe de données pondérées par le coefficient de pondération modifié et intègre un indice de confiance moyen issu de la pondération des coefficients de chaque sous-ensemble de données.

En référence à la figure 5, l'algorithme de filtrage est appliqué en parallèle à diverses configurations de données, à savoir aux données de qualification standard ou de qualification spécifique aux compagnies. Sur cette figure, par soucis de clarté, seul le traitement réalisé à une configuration de donnée a été illustré, le traitement étant par ailleurs réalisé sur les autres configurations de données.

Pour chaque type de donnée, la zone de freinage de la piste est découpée en zones de freinage (étape 11). Pour chaque zone de freinage, il est ensuite déterminé si le freinage est un freinage manuel ou un freinage automatique. Les données sont toutefois exploitées différemment, qu'il s'agisse d'un freinage manuel (étape 12) ou d'un freinage automatique (étape 13). S'il s'agit d'un freinage manuel (étape 12), on met en forme séparément les données enregistrées ou non par enregistrement à accès rapide QAR (étapes 14 et 15). S'il s'agit d'un freinage automatique, on vérifie si un coefficient de freinage maximum est atteint sur chaque zone de freinage (étape 16).

Lors du filtrage, les coefficients de pondération sont mis à jour en fonction de la nature du freinage, un freinage automatique, impliquant généralement un freinage avec un coefficient de freinage plus faible, impliquant une augmentation des coefficients de pondération K'1, tandis qu'un enregistrement des données par QAR impliquant une diminution des coefficients de pondération K'1.

Les segments de freinage sont ainsi mis en forme en fonction de la nature du freinage et par type d'enregistrement (étape 17).

Pour chaque segment de freinage, un vecteur est élaboré, chaque vecteur identifiant le segment, le type de segment et le coefficient de pondération modifié K'1 affecté aux données.

En outre, à chaque segment sont associées les données, un horodatage, la position et la phase de freinage.

Par ailleurs, le filtrage mis en oeuvre est un filtrage temporel et est spécifique à chaque type de données.

En outre, le filtrage est effectué en fonction de la fréquence d'échantillonnage des données afin d'uniformiser la fréquence d'échantillonnage utilisée pour l'acquisition des données en pondérant différemment les données en fonction de leur fréquence d'échantillonnage.

A l'issue de l'étape de filtrage, les premières données D1 relatives aux paramètres de freinage de l'aéronef sont traitées par l'étage de calcul III pour calculer le coefficient $\mu$ de friction de la piste (étape 18).

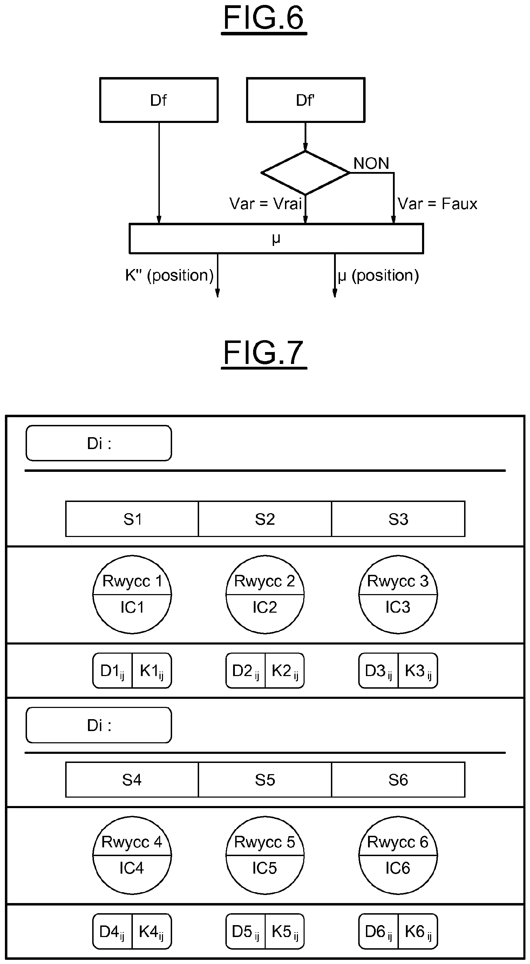

En référence à la figure 6, ce calcul s'effectue à partir des données filtrées Df identifiées par le segment de piste et le type de piste et, le cas échéant, à partir de données filtrées Df' provenant d'un autre groupe de données.

En ce qui concerne les données de freinage, celles-ci sont intégrées avec l'information du type de données.

Le type de données est un vecteur qui permet de connaître le type de freinage, le type de précision, le type d'avion ou matériel, ...

Si les autres données sont disponibles, par exemple des données provenant des capteurs ou du radar, elles sont également intégrées au calcul et une variable booléenne Var est positionnée à « VRAI » pour indiquer que le coefficient de pondération associé à ces données peut être amélioré.

Si ce n'est pas le cas, la variable booléenne Var est positionnée à « FAUX » pour indiquer que le coefficient de pondération ne sera pas affecté.

Par exemple, le calcul du coefficient de friction $\mu$ vu par l'avion est effectué par apprentissage préalable obtenu à partir de données d'avions qui ont déjà atterris ou à partir de données expérimentales, et utilise un modèle estimé à partir de ces données, le coefficient de friction étant ensuite obtenu par prédiction à partir des données filtrées.

Bien entendu, la prédiction est mise à jour au fur et à mesure de l'enrichissement de la base d'entraînement avec les nouvelles données reçues.

Divers types de techniques peuvent être utilisées à cet effet.

Par exemple, on utilisera un algorithme de Random Forest pour prédire la valeur d'un coefficient de friction à partir des données décodées.

Lors de l'étape de calcul 18 du coefficient de friction, le coefficient de pondération K1" est modifié en fonction de la position de la zone de freinage.

Lors de l'étape 19 suivante, un état de piste partiel RCC est défini localement à partir de la valeur du coefficient de friction et, à l'issue de l'étape 19, le coefficient de pondération K1" est modifié en fonction du temps (K1'''), les données les plus anciennes étant affectées d'un coefficient de confiance dégradé.

Comme on le voit sur la figure 3, les deuxièmes données D2 élaborées au sol portant sur les conditions de roulage de l'aéronef subissent également les étapes 2, 9 et 10 de capture, de décodage et de filtrage. Toutefois, les données filtrées sont directement utilisées pour le calcul de l'état de pistes partiel RCC (étape 19). Ce n'est qu'à l'issu de l'étape de calcul de l'état de piste partiel que le coefficient de pondération est modifié en fonction du temps (K'2).

Lors de l'étape 20 suivante, le coefficient de piste est calculé, ce coefficient de piste étant associé à un indice de confiance calculé à partir des coefficients de pondération modifiés. Ce calcul est réalisé à partir de la somme des états de piste locaux pondérés.

En d'autres termes, le coefficient de piste RWYCC est élaboré à partir de la relation suivante :

$$RWYCC = \frac{\sum RCC \; x \; K'''}{\sum K'''}$$

Il est ainsi fourni un coefficient de piste global, pour chaque tronçon de piste accompagné d'un indice de confiance IC dont la valeur dépend de l'instant d'acquisition des données et de la position de la zone de freinage.

Enfin, lors de l'étape 21 finale, le coefficient de piste et l'indice de confiance disponibles pour chaque secteur de la piste, sont délivrés à l'application informatique API, avantageusement accessible en ligne.

On a représenté sur la figure 7 un exemple de mise en oeuvre d'un tel rapport.

L'application API fournit par exemple une fenêtre illustrant différentes pistes, ici au nombre de deux, comprenant plusieurs secteurs S1, S2, S3, S4, S5, S6 chacun identifiés.

Chaque secteur est associé à un coefficient de piste RWYCC, ici Rwycc1 à Rwycc6$_i$ associé à son indice de confiance IC, ici IC1 à IC6.

En outre, chaque secteur est associé à la liste des entrées Dlij à D6ij associées chacune à un coefficient de pondération Klij à K6ij. Un historique des coefficients RWYCC$_i$(t) de piste associés chacun à leur indice de confiance Ic$_i$(t) peut également être fourni afin de permettre d'élaborer une tendance de variation des coefficients de piste pour fournir une aide à la décision en fonction de l'historique de variation des coefficients de piste.

## Revendications

1. Procédé de détermination de conditions de piste d'atterrissage pour aéronef, comprenant les étapes de :

    - acquisition d'un ensemble de groupes de données (D1, D2) de différents types pour l'évaluation et l'observation de conditions de dégradation de la piste ;
    - élaboration de coefficients de pondération (K1, K2) de chaque groupe de données ;
    - filtrage des données ;
    - détermination, pour chaque groupe de données, d'un état de piste partiel (RCC) ;
    - modification des coefficients de pondération de chaque groupe de données ; et
    - combinaison des états de piste partiels pour élaborer un coefficient de piste (RWYCC) associé à un indice de confiance (IC) élaboré à partir des coefficients de pondération modifiés.

2. Procédé selon la revendication 1, dans lequel, lors du filtrage, les données sont regroupées par segments de zone de freinage associés chacun à des informations d'identification du segment de zone de freinage, des informations de datation desdites données, des informations de position du segment et un coefficient de pondération modifié.

3. Procédé selon l'une des revendications 1 et 2 dans lequel, lors de l'acquisition des données, on acquiert des premières données (D1) relatives à des paramètres de freinage de l'aéronef et des deuxièmes données (D2) élaborées au sol portant sur les conditions de roulage de l'aéronef.

4. Procédé selon la revendication 3, dans lequel les premières données (D1) sont acquises tant que l'avion roule sur la piste d'atterrissage à une vitesse inférieure à une valeur de seuil.

5. Procédé selon l'une des revendications 3 et 4, dans lequel, à l'issue de l'étape de filtrage, les premières données relatives aux paramètres de freinage sont fournies à un étage de calcul (III) apte à élaborer un coefficient de friction ($\mu$) de la piste horodaté et un coefficient de pondération modifié.

6. Procédé selon la revendication 5, dans lequel, lors de l'étape de calcul du coefficient de friction ($\mu$), on calcule le coefficient de friction à partir des premières données filtrées et des deuxièmes données filtrées.

7. Procédé selon l'une quelconque des revendications 3 à 6, comprenant une étape de décodage des premières et deuxièmes données.

8. Procédé selon l'une quelconque des revendications 3 à 7, dans lequel les deuxièmes données comprennent des données de position de l'aéronef, des données portant sur les conditions de piste, et des données météorologiques.

9. Procédé selon l'une quelconque des revendications 1 à 8, dans lequel le coefficient de pondération issu de l'étape de filtrage est modifié en fonction du temps ou de la fréquence d'échantillonnage des données.

10. Procédé selon l'une quelconque des revendications 1 à 9, comprenant une étape préalable d'initialisation de coefficients de pondération pour chaque groupe de données.

11. Procédé selon l'une quelconque des revendications 1 à 10, dans lequel lors de l'étape de détermination de l'état de piste partiel, on utilise des données d'un autre groupe de données.

12. Procédé selon l'une quelconque des revendications 1 à 11, dans lequel le coefficient de piste (RWYCC) est élaboré pour différents secteurs de la piste, notamment par tiers de piste, et dans lequel on élabore un historique des coefficients de piste.

13. Système de détermination de conditions de piste d'atterrissage pour aéronef, comprenant:

    - des moyens (I, II) d'acquisition d'un ensemble de groupes de données de différents types pour l'évaluation et l'observation de conditions de dégradation de la piste ;
    - des moyens (I, II) pour affecter des coefficients de pondération à chaque groupe de données ;
    - des moyens de filtrage et de calcul (III) configurés pour déterminer, pour chaque groupe de données, un état de piste partiel, et pour modifier les coefficients de pondération de chaque groupe de données ; et
    - les moyens de calcul (III) étant aptes à combiner les états de piste partiels pour élaborer un coefficient de piste associé à un indice de confiance élaboré à partir des coefficients de pondération modifiés.

**Patentansprüche**

1. Verfahren zum Bestimmen der Landebahnbedingungen für Flugzeuge, das die folgenden Schritte umfasst:

   - Erfassen eines Satzes von Datengruppen (D1, D2) unterschiedlichen Typs zum Bewerten und Überwachen von Verschlechterungsbedingungen der Bahn;
   - Erstellen von Gewichtungskoeffizienten (K1, K2) für jede Datengruppe;
   - Filtern der Daten;
   - Bestimmen eines partiellen Bahnzustands (RCC) für jede Datengruppe;
   - Modifizieren der Gewichtungskoeffizienten für jede Datengruppe; und
   - Kombinieren der partiellen Bahnzustände, um einen Bahnkoeffizienten (RWYCC) zu erstellen, der mit einem anhand der modifizierten Gewichtungskoeffizienten erstellten Konfidenzindex (IC) verbunden ist.

2. Verfahren nach Anspruch 1, wobei die Daten während des Filterns nach Bremszonensegmenten gruppiert werden, die jeweils mit Identifikationsinformationen des Bremszonensegments, Datierungsinformationen der Daten, Segmentpositionsinformationen und einem modifizierten Gewichtungskoeffizienten verbunden sind.

3. Verfahren nach einem der Ansprüche 1 und 2, wobei während des Erfassens der Daten erste Daten (D1), die sich auf Bremsparameter des Flugzeugs beziehen, und zweite Daten (D2), die am Boden über die Rollbedingungen des Flugzeugs erstellt werden, erfasst werden.

4. Verfahren nach Anspruch 3, wobei die ersten Daten (D1) erfasst werden, solange das Flugzeug mit einer Geschwindigkeit unterhalb eines Schwellenwerts auf der Landebahn rollt.

5. Verfahren nach einem der Ansprüche 3 und 4, wobei am Ende des Schritts der Filterns die ersten Daten, die sich auf die Bremsparameter beziehen, an einen Schritt des Berechnens (III) bereitgestellt werden, der dazu ausgelegt ist, einen mit einem Zeitstempel versehenen Reibungskoeffizienten (u) der Bahn und einen modifizierten Gewichtungskoeffizienten zu erstellen.

6. Verfahren nach Anspruch 5, wobei während des Schritts des Berechnens des Reibungskoeffizienten (µ) der Reibungskoeffizient anhand erster gefilterter Daten und zweiter gefilterter Daten berechnet wird.

7. Verfahren nach einem der Ansprüche 3 bis 6, das einen Schritt des Dekodierens der ersten und zweiten Daten umfasst.

8. Verfahren nach einem der Ansprüche 3 bis 7, wobei die zweiten Daten Positionsdaten des Flugzeugs, Daten über die Bahnbedingungen und meteorologische Daten umfassen.

9. Verfahren nach einem der Ansprüche 1 bis 8, wobei der aus dem Schritt des Filterns erstellte Gewichtungskoeffizient als Funktion der Zeit oder der Abtastfrequenz der Daten modifiziert wird.

10. Verfahren nach einem der Ansprüche 1 bis 9, das einen vorherigen Schritt des Initialisierens von Gewichtungskoeffizienten für jede Datengruppe umfasst.

11. Verfahren nach einem der Ansprüche 1 bis 10, wobei während des Schritts des Bestimmens des partiellen Bahnzustands Daten aus einer weiteren Datengruppe verwendet werden.

12. Verfahren nach einem der Ansprüche 1 bis 11, wobei der Bahnkoeffizient (RWYCC) für verschiedene Bereiche der Bahn, insbesondere für jedes Drittel der Bahn, erstellt wird und wobei eine Historie der Bahnkoeffizienten erstellt wird.

13. System zum Bestimmen der Landebahnbedingungen für Flugzeuge, das Folgendes umfasst:

    - Mittel (I, II) zum Erfassen eines Satzes von Datengruppen unterschiedlichen Typs zum Bewerten und Überwachen von Verschlechterungsbedingungen der Bahn;
    - Mittel (I, II) zum Zuweisen von Gewichtungskoeffizienten zu jeder Datengruppe;
    - Mittel zum Filtern und Berechnen (III), die dazu konfiguriert sind, einen partiellen Bahnzustand für jede Datengruppe zu bestimmen und die Gewichtungskoeffizienten jeder Datengruppe zu modifizieren; und
    - wobei die Mittel zum Berechnen (III) dazu ausgelegt sind, die partiellen Bahnzustände zu kombinieren, um einen Bahnkoeffizienten zu erstellen, der mit einem anhand der modifizierten Gewichtungskoeffizienten erstellten Konfidenzindex verbunden ist.

**Claims**

1. Method for determining aircraft landing runway conditions, comprising the steps of:

- acquiring a set of data groups (D1, D2) of different types for evaluating and monitoring deteriorating runway conditions;
- deriving weighting coefficients (K1, K2) for each data group;
- filtering the data;
- determining, for each data group, a partial runway condition (RCC);
- modifying the weighting coefficients of each data group; and
- combining the partial runway conditions to derive a runway coefficient (RWYCC) associated with a confidence index (CI) derived from the modified weighting coefficients.

2. Method according to claim 1, wherein, during filtering, the data is grouped by braking zone segments, each associated with braking zone segment identification information, dating information of said data, segment position information and a modified weighting coefficient.

3. Method according to one of claims 1 or 2, wherein, during the data acquisition, first data (D1) relating to braking parameters of the aircraft and second data (D2) derived from the ground relating to taxiing conditions of the aircraft are acquired.

4. Method according to claim 3, wherein the first data (D1) is acquired as long as the aircraft is taxiing on the runway at a speed below a threshold value.

5. Method according to one of claims 3 and 4, wherein, at an end of the filtering step, the first data relating to the braking parameters is supplied to a calculating step (III) adapted to derive a time-stamped coefficient of friction ($\mu$) de the runway and a modified weighting coefficient.

6. Method according to claim 5, wherein, during the step of calculating the coefficient of friction ($\mu$), the coefficient of friction is calculated from first filtered data and second filtered data.

7. Method according to any one of claims 3 to 6, comprising a step of decoding the first and second data.

8. Method according to any one of claims 3 to 7, wherein the second data comprises aircraft position data, data on the conditions of the runway and meteorological data.

9. Method according to any one of claims 1 to 8, wherein the weighting coefficient derived from the filtering step is modified as a function of time or a sampling frequency of the data.

10. Method according to any one of claims 1 to 9, comprising a prior step of initialising weighting coefficients for each data group.

11. Method according to any one of claims 1 to 10, wherein during the step of determining the partial runway condition, data from another data group is used.

12. Method according to any one of claims 1 to 11, wherein the runway coefficient (RWYCC) is derived for different sectors of the runway, in particular for each third of the runway, and wherein a history of runway coefficients is compiled.

13. System for determining aircraft landing runway conditions, comprising:

- means (I, II) for acquiring a set of data groups of different types for evaluating and monitoring deteriorating runway conditions;
- means (I, II) for assigning weighting coefficients to each data group;
- filtering and calculating means (III) configured for determining, for each data group, a partial runway condition, and for modifying weighting coefficients of each data group; and
- the calculating means (III) being adapted to combine partial runway conditions for producing a runway coefficient associated with a confidence index derived from modified weighting coefficients.

## FIG.1

## FIG.2

# FIG.3

# FIG.4

# FIG.5

# FIG.6

# FIG.7

**EP 4 259 525 B1**

## RÉFÉRENCES CITÉES DANS LA DESCRIPTION

**Documents brevets cités dans la description**

- US 10202204 B1
- US 2019156682 A1
- US 2010079308 A1
- FR 3077913 A1
- US 2015142388 A1